# EUROPEAN PATENT APPLICATION

(11) **EP 0 851 275 A1**
(43) Date of publication of application: **01.07.1998**
(21) Application number: 97122736.8
(22) Date of filing: 23.12.1997
(51) Int. Cl.: G03B 19/04

(54) **Method for producing a one-time use camera**

(30) Priority: 25.12.1996 JP 345707/96; 25.12.1996 JP 345708/96
(71) Applicant: KONICA CORPORATION, Tokyo (JP)
(72) Inventor: Ito, Kiyohide, Hino-shi, Tokyo (JP)
(74) Representative: Türk, Gille, Hrabal, Leifert

(57) **Abstract**

A method for producing a one-time use camera, including the following steps: Loading a cartridge (C), in which one end of an unexposed film is engaged with a winding shaft (12) and the unexposed film is wound around the winding shaft, and a spool to a unit main body of the one-time use camera having a photographing function so that the cartridge (C) is placed at one side of an image frame of the unit main body and the spool is placed at other side of the image frame (16); feeding out the film (F) from the cartridge by a feeding-out motor; wind the film onto the spool (3) from the cartridge acrossing the image frame by a film-winding motor at a torque smaller than an engagement strength between the film and the winding shaft; detecting a rise of film-winding torque of the film (F) by the film-winding motor at completion of the film-winding step; stopping the rotation of the film-winding motor when the film-winding torque by the film-winding motor exceeds a predetermined value; and rotating the feeding-out motor reversely for drawing the film wound on the spool (3) to a predetermined position.

## Description

### BACKGROUND OF THE INVENTION

The present invention relates to a method for producing a one-time use camera and to the one-time use camera.

A one-time use camera is loaded, in the course of a production step therefor, with an unexposed film, in advance. Namely, the one-time use camera is shipped under the condition that a film fed out of a cartridge for an APS film, or a film taken out of a patrone for a 135 film is wound totally on a spool in the camera. A user is therefore supposed to do film-winding for each exposure to wind the film into the cartridge or the patrone by one frame.

Incidentally, in the following explanation, wording of a cartridge is used with an APS film as the main, and expression of a patrone is not used.

A production step to wind a film fed out of a cartridge on a spool includes one wherein the film is wound on a spool outside a unit main body having photographing function, and the other wherein the film is wound on a spool inside a unit main body. In the case of the production step wherein the film is wound on a spool outside a unit main body, a space for jigs and others can be secured sufficiently, but a broad space is required for the production site because of a large-sized production step. In the case of the production step wherein the film is wound on a spool inside a unit main body, there is restriction for a space for jigs or the like, but the production step can be made small, which results in space-saving.

As a method of film-winding in a unit main body, there is disclosed TOKKAIHEI 5-134361 wherein there is described a production method in which a patrone and a spool are loaded in a unit main body, a film is fed out of the patrone, the spool is rotated faster than the speed for feeding out the film, and a leading edge of the film is caught by a catching means on the spool so that the film is wound in a roll shape on the spool.

When winding a film on a spool from a cartridge in the past, film-winding for a prescribed length has been conducted by detecting the number of rotations of a film-winding motor and by detecting the position of perforations by a sensor. Incidentally, the film-winding for a prescribed length is one which makes the first frame to be exposed after the first film-winding for one frame conducted by a user to be capable of moving to the position of a photographing image frame.

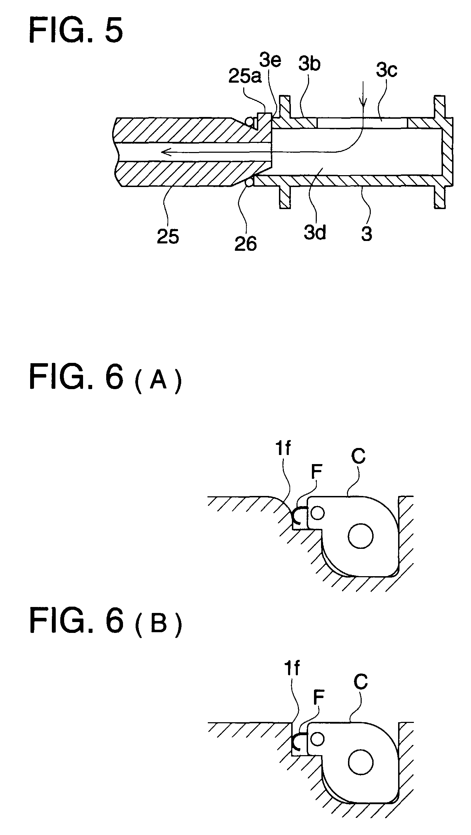

The inventors of the invention found that film feeding-out is greatly affected by a shape of a corner portion which is formed by a plane that is positioned between a cartridge chamber to be loaded with a cartridge and image frame which forms a photographing image plane and runs mostly in parallel with a film to be fed out and by an internal wall of the cartridge chamber which is mostly perpendicular to the film. Namely, as shown in Figs. 6 (A) and 6 (B), when the corner portion 1f is formed to be in a shape of an arc or to be rectangular, a leading edge of film F fed out of cartridge C hits the corner portion 1f and the film is not fed smoothly, because the film F in the cartridge C is curled.

Further, in a one-time use camera, a film is held at the prescribed position in the optical axis direction by a film guide plane of a unit main body and the surface of a pressure plate on the rear cover in the course of photographing, and light passing through a camera lens is focused on the film surface through appropriate focusing. When the surface of the pressure plate on the rear cover is formed to be a simple plane or a curved surface, foreign substances such as dust enter a space between the film guide plane and the pressure plate surface, causing a problem of scratches on the film surface. Therefore, there has been known a one-time use camera provided with plural ribs or plural projections running in the film feeding direction. The rate of area of the plural projections on the pressure plate surface is as small as about 30% or less.

As explained above, as a production step for winding a film fed out of a cartridge on a spool, the step to wind a film on a spool inside a unit main body is preferable because of its merit of space-saving, and it is possible to wind a film in a daylight room when a rear cover is mounted to cause the light-tight condition after a cartridge, a film and a spool are loaded in a unit main body.

However, when film-winding is conducted with a rear cover attached on, detection is only for the number of rotations of a film-winding motor only because detection of the position of perforations by means of a sensor is impossible. Therefore, when a slip is caused on the film-winding motor, there occurs a defect caused by an amount of the film wound which is too long or too short.

### SUMMARY OF THE INVENTION

In view of the problems mentioned above, the first object of the invention is to propose a method for producing a one-time use camera capable of winding a film to the prescribed position under the condition that a rear cover is attached after loading a cartridge, a film and a spool in a unit main body.

Further, since film feeding-out is greatly affected by a shape of a corner portion of an internal wall of a cartridge chamber which is mostly perpendicular to the film fed out as stated above, the second object is to propose a one-time use camera in which the shape of the corner portion is improved.

Even when plural ribs are provided in the film feeding direction as in the prior art stated above, it sometimes happens that intruded dust sticks to the both sides of a rib in the beginning, and then sticks to the peak of the rib to cause scratches on a film. On the other hand, even when plural projections are provided on the pressure plate surface, pressure of contact to the film is increased because the area rate of the plural projections on the pressure plate surface is small, and there is a problem that pressure fog tends to be caused on a film.

In view of the problems mentioned above, the third object of the invention is to propose a one-time use camera having therein a pressure plate surface which causes neither scratches nor pressure fog even when foreign substances such as dust intrude.

The first object can be attained by a method for producing a one-time use camera for causing an end of an unexposed film to be engaged with a winding shaft in a cartridge, and for causing the aforesaid film wound around the winding shaft to be fed out of the cartridge by a feeding-out motor to be wound on a film-winding member acrossing image frame forming a photographing image plane by a film-winding motor, wherein there are provided a step to load the cartridge and the film-winding member in the unit main body having a photographing function, a step to cover at least the cartridge, the film and the film-winding member with a rear cover, a step to wind the film around the film-winding member with force which is smaller than engagement strength between the film and the winding shaft, a step to detect the rise of film-winding torque by the film-winding motor when the film-winding is completed, a step to stop the rotation of the film-winding motor when the film-winding torque by the film-winding motor rises exceeding the prescribed value, and a step to rotate the feeding-out motor reversely to draw the film wound on the film-winding member to the prescribed position, while detecting the revolution of the feeding-out motor.

The second object mentioned above is attained by using, in the aforesaid method for producing a one-time use camera, the one-time use camera having in its unit main body which has a photographing function a cartridge chamber in which a cartridge housing an unexposed film is loaded, image frame which forms a photographing image plane, and a film roll chamber where the film fed out of the cartridge is wound wherein a corner portion formed by a plane which is positioned between the cartridge chamber and the image frame and runs mostly in parallel with a film fed out and by an internal wall of the cartridge chamber which is mostly perpendicular to the film is chamfered to be flat.

The third object mentioned above is attained by using, in the aforesaid method for producing a one-time use camera, the one-time use camera having a film guide plane on its unit main body which has a photographing function in the course of photographing and a pressure plate surface provided on a rear cover, both of which hold a film at the prescribed position in the optical axis, wherein plural recesses are provided on at least a portion of the pressure plate surface where the rear side of the photographing image plane of the film comes in contact, the area rate of the plural recesses on the pressure plate surface is in the range of 40% - 50%, and a plane other than the recesses is formed to be a curved surface.

### BRIEF DESCRIPTION OF THE DRAWINGS

Fig. 1 is a perspective view showing a unit main body in which a cartridge and a spool are not loaded.

Fig. 2 is a perspective view showing an example of a film-winding mechanism including shutter charging.

Fig. 3 is a longitudinal section of a one-time use camera.

Fig. 4 is a perspective view showing how a film is fed out and then is wound.

Fig. 5 is a sectional view showing that a tip portion of a vacuum head is in close contact with a spool.

Each of Figs. 6 (A) and 6 (B) is a sectional view for a cartridge and a cartridge chamber.

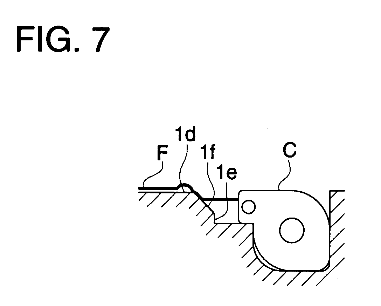

Fig. 7 is a sectional view for a cartridge and a cartridge chamber.

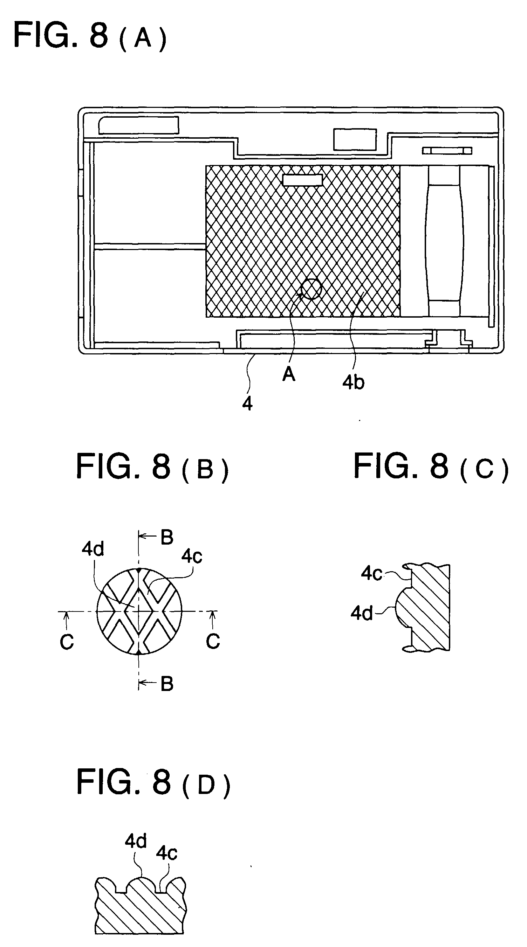

Each of Figs. 8 (A) - 8 (D) is a diagram of a pressure plate surface of a rear cover.

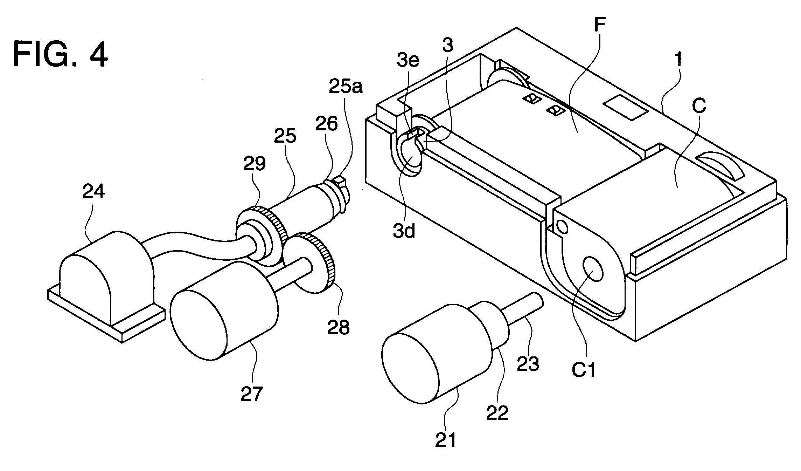

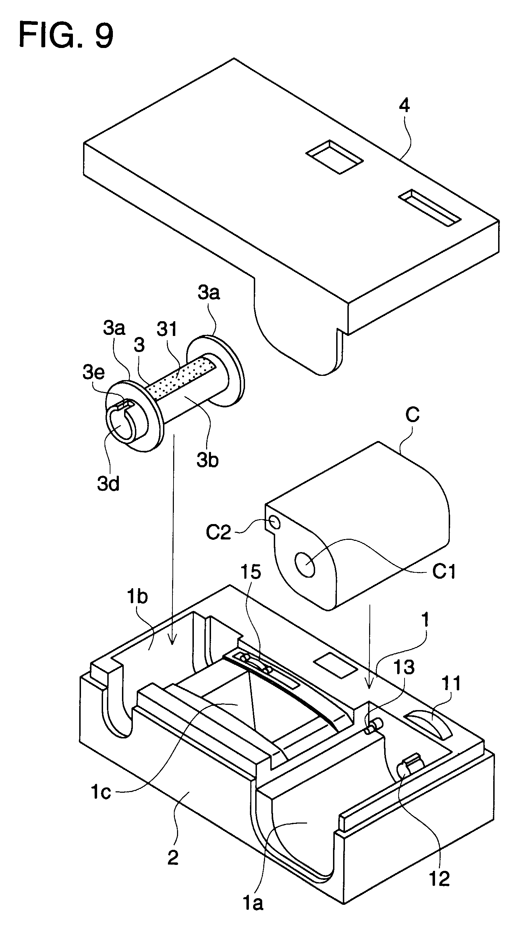

Fig. 9 is a diagram wherein an adhesion layer is provided on a part of the flank of a spool in Fig. 4.

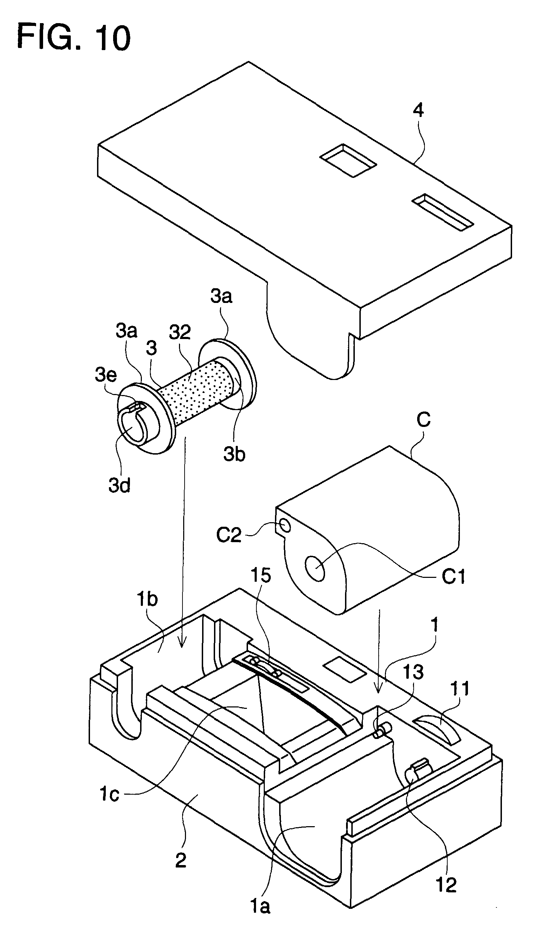

Fig. 10 is a diagram wherein an adhesion layer is provided on the whole part of the flank of a spool in Fig. 4.

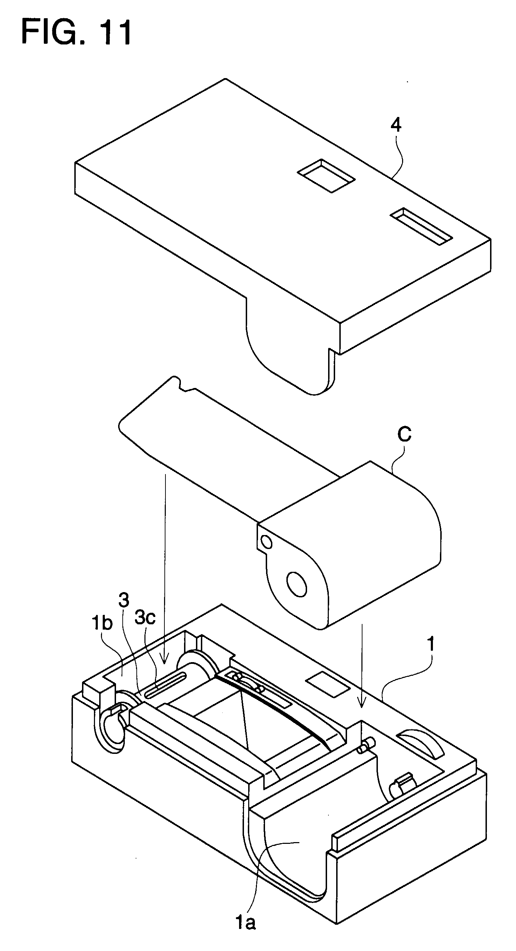

Fig. 11 is a diagram showing another method for loading a cartridge.

### DETAILED DESCRIPTION OF THE INVENTION

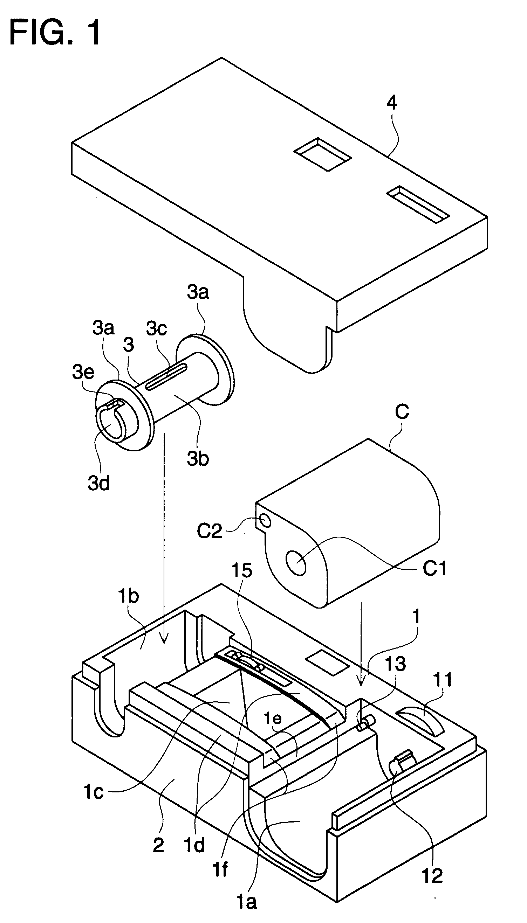

First, an embodiment of loading a film in a one-time use camera for attaining the first object will be explained in detail as follows, referring to Figs. 1 - 5.

Fig. 1 is a perspective view showing that a cartridge and a spool are not loaded in a unit main body, and a step to load the cartridge and the spool in the unit main body will be explained, referring to Fig. 1.

In Fig. 1, the numeral 1 represents a unit main body which is provided with various photographing mechanisms, and explanation of mechanisms which are not connected with the invention will be omitted. The numeral 2 represents a front cover which covers the front side of the unit main body. The symbol C represents a cartridge for an APS film which houses all of the unexposed film including its edge portion. The numeral 3 is a spool representing a film-winding member, and a film is wound around flank 3b located between flanges 3a. The flank 3b is provided thereon with air intake 3c which attracts a film, and borehole 3d is provided in the axial direction, which will be explained in detail later.

In the first step, unit main body 1 on which front cover 2 is attached, cartridge C and spool 3 are prepared, then the cartridge C is loaded in cartridge chamber 1a of the unit main body 1, and the spool 3 is loaded in film roll chamber 1b of the unit main body 1.

When loading the cartridge C in the cartridge chamber 1a, film-winding shaft C1 which is on the part of the side where the film-winding shaft is not visible in the direction of the cartridge C needs to be engaged with winding shaft 12 which is directly connected with film-winding knob 11, and light-shielding cover shaft C2 on the part of the side where the light-shielding cover shaft is not visible equally needs to be engaged with light-shielding cover operating shaft 13. Incidentally, a cartridge for an APS film is equipped at its film gate with a built-in light-shielding cover, as is widely known, and the film gate is usually covered by the light-shielding cover so that exposure to a film inside may be prevented. The light-shielding cover shaft C2 is formed to be united with the light-shielding cover solidly.

Spool 3 is arranged so that air intake 3c on flank 3b may be located at its top position with a slight inclination toward a film-winding direction.

After the cartridge C and the spool 3 are loaded in unit main body 1 as stated above, there follows a step wherein the items mentioned above are covered by a rear cover to shield a film from light.

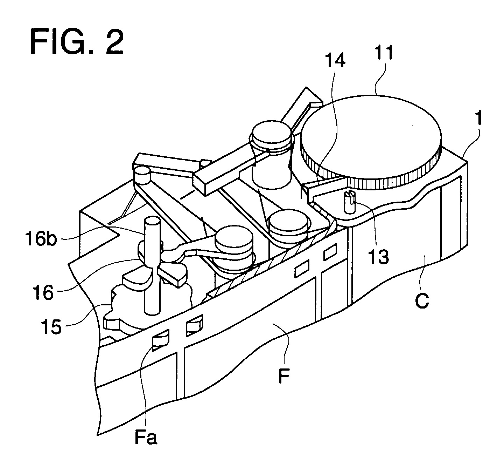

The next step is to feed a film out of the cartridge C, in which the light-shielding cover of the cartridge C needs to be opened, and the winding shaft 12 needs to be rotatable at least in the film feeding-out direction. These operations in the step will be explained as follows, referring to Fig. 2 representing a perspective view of an embodiment of a film-winding mechanism including shutter charging.

In Fig. 2, the film-winding knob 11 is formed to be united with the winding shaft 12, and the film-winding knob 11 is prevented by reverse-rotation-preventing claw 14 from making turn in the clockwise direction which is opposite to the film-winding direction. Therefore, engagement between the reverse-rotation-preventing claw 14 and the film-winding knob 11 is released by pushing the tip of the reverse-rotation-preventing claw 14 clockwise with a bar-shaped jig. Further, the light-shielding cover operating shaft 13 is protruded upward through the unit main body 1 from the cartridge chamber 1a, and when this light-shielding cover operating shaft 13 is rotated clockwise with a jig, the light-shielding cover shaft C2 of the cartridge C is rotated unti-clockwise, causing a light-shielding cover to be opened.

The jig to push the reverse-rotation-preventing claw 14 and the jig to rotate the light-shielding cover operating shaft 13 are inserted through unillustrated holes made on front cover 2, and these holes are finally covered with paper covers to be possibly invisible.

Between cartridge chamber 1a and film roll chamber 1b on unit main body 1, there is provided image frame 1c which forms a photographing image plane, and sprocket 15 which engages with perforation Fa of film F is provided in the vicinity of the image frame 1c. The sprocket 15 rotates for feeding film F by one frame, and it charges a shutter, advances a frame counter and regulates rotation of a film-winding knob through the interlocked mechanism. It is therefore preferable for the film F to engage with the sprocket 15 to be further fed out to spool 3 in film roll chamber 1b smoothly that the sprocket 15 is free of rotation in at least the direction for feeding the film F out.

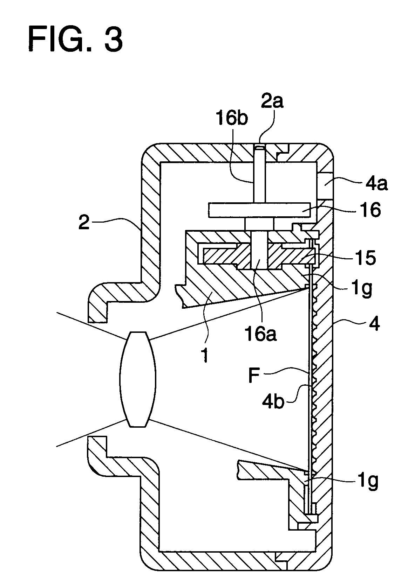

Fig. 3 is a longitudinal section of a one-time use camera. In Figs. 2 and 3, sprocket 15 engages with shaft 16a which is located under charging cam 16 that charges the shutter, and rotates solidly with the shaft 16a. Shaft 16b located over the charging cam 16 is engaged at its tip with through-hole 2a of front cover 2. Therefore, when the shaft 16b of the charging cam 16 is nipped and moved upward by a jig inserted through through-hole 4a made on the rear cover, engagement between the lower shaft 16a and sprocket 15 is released to be free of rotation.

Since the sprocket 15 in the present embodiment makes 1/3 turns for feeding film F by one frame, if the section of the shaft 16a is made to be triangular-shaped and a triangular hole is made on the sprocket 15 so that they may be engaged with each other, a phase of the cam is not staggered even when the shaft 16a is engaged with or disengaged from the triangular hole.

Each of the through-hole 2a on the front cover 2 and the through-hole 4a on the cover 2 is finally covered by a paper cover to become invisible.

As stated above, the step to open the light-shielding cover and to make the film-winding knob 11 and sprocket 15 to be rotatable is followed by the step to feed film F out of cartridge C and to wind the film F on spool 3. Following steps are will be explained, referring to Fig. 4. Fig. 4 is a perspective view showing how the film is fed out and is wound, in which the rear cover 4 is omitted for the convenience of explanation.

In Fig. 4, the numeral 21 is a film feeding-out motor which is composed of a servomotor, and it rotates film feeding shaft 23 through clutch 22. When feeding film F out of cartridge C, the film feeding shaft 23 is engaged with film-winding shaft C1 of the cartridge C, and the film-winding shaft C1 is rotated counterclockwise.

Incidentally, it is also possible to employ arrangement wherein the rotation of the film feeding-out motor 21 is transmitted to film-winding knob 11 so that the film-winding knob 11 is rotated reversely to feed the film F out of the cartridge C.

Now, before the leading edge of the film F is fed out to the position of air intake 3c located at the top portion of the spool 3, a tip portion of vacuum head 25 connected with vacuum pump 24 is brought into closed contact with borehole 3d of the spool 3. Operations under this condition will be explained, referring to a sectional view in Fig. 5.

In Figs. 4 and 5, the vacuum head 25 is brought into close contact with the hollow hole 3d of the spool 3. Then, air intake is conducted by the vacuum pump 24. Thereupon, air intake is conducted from the air intake 3c through the vacuum head 25 and the borehole 3d, and the leading edge of the film F is attracted to flank 3b of the spool 3. The numeral 26 is an O-ring which prevents unnecessary air intake through the clearance between the vacuum head 25 and the borehole 3d.

As stated above, the film F is fed out of the cartridge C under the condition that air intake is conducted from the borehole 3d of the spool 3 by the vacuum pump 24. When the film F is fed out until its leading edge arrives at the position of the air intake 3c on the spool 3, the air-intake 3c is covered by the film F, and thereby this state can be detected by an unillustrated pressure sensor provided on the vacuum pump 24, resulting in suspension of the rotation of film feeding-out motor 21. In this case, it is possible either to cause film feeding shaft 23 to run idle through clutch 22 with the film feeding shaft 23 and the film-winding shaft C1 of the cartridge C engaged with each other, or to release engagement between the film feeding shaft 23 and the film-winding shaft C1 with the film feeding-out motor 21 retracted in the axial direction.

Then, film-winding motor 27 composed of a servomotor is driven under the condition that the leading edge of the film F is attracted to the flank 3b of the spool 3. Thereupon, first gear 28 connected with a shaft of film-winding motor 27 is rotated clockwise to rotate second gear 29 engaged with the first gear 28 counterclockwise. Since the second gear 29 is formed to be solid with the vacuum head 25, the vacuum head 25 is also rotated counterclockwise. Since projection 25a provided at the tip of the vacuum head 25 is engaged with cutout 3e provided on the spool 3, the spool 3 is rotated counterclockwise with film F attracted thereto. After the film F is wound around the spool 3 several times, operation of the vacuum pump 24 for suction is continued until the end of the film-winding operation.

Since the cutout 3e provided on the spool 3 is provided in the same direction radially as that of the air intake 3c, the position of the air intake 3c can be discriminated even under the condition that the rear cover 4 is mounted.

Since an end of film F on the part of cartridge C is fixed on a film-winding shaft in the cartridge C through insertion or gluing, the film F is wound around the spool 3 with force smaller than the fixing force.

After this, when the film F is wound around the spool 3 to the utmost, the film F is stretched under the state wherein the film F can not be wound any more. As a result, the film-winding motor 27 stops running and winding torque rises sharply. By detecting the rise of winding torque of the film-winding motor 27 or the suspention of the rotaion of the film-winding motor 27, the rotation of the film-winding motor 27 is stopped because it is understood that the film F is wound to its final end.

Since the load required for drawing film F out varies depending on films, there may be employed an arrangement wherein a prescribed film-winding torque is established, and the film-winding motor 27 is suspended only when the torque is increased to exceed the prescribed torque.

Then, film feeding-out motor 21 is rotated in the direction opposite to that stated above to wind the film F into cartridge C, and when the first frame for photographing is positioned to be away from image frame by a distance equivalent to one frame toward the spool 3, the film feeding-out motor 21 is suspended. In this way, the film-winding step is completed.

Under the state that the step to wind film F into cartridge C to the utmost has been completed, the trailing edge of the film F (called a "trailer end") closer to the film-winding shaft is engaged therewith, and an operation to rewind the film F to the fixed position to cover the length between the "trailer end" of the film F and the first frame for photographing which is determined by the standard, can be conducted by measuring the number of rotations of the film feeding-out motor 21. In addition, since the film of an APS type used in the present example is provided with perforation Fa showing the position of each frame, it is possible to rewind the film to fixed position by detecting the perforation provided on the first frame for photographing by means of a sensor.

Further, due to two flanges 3a provided on flank 3b of the spool 3, it is prevented that film F is shifted in the axial direction to cause spiral winding.

Next, an embodiment of a one-time use camera for attaining the second object will be explained as follows, referring to Fig. 1 and Fig. 7.

In the present embodiment, corner portion 1f formed by plane 1d that is positioned between cartridge chamber 1a and image frame 1c and runs mostly in parallel with a film to be fed out and by an internal wall 1e of the cartridge chamber which is mostly perpendicular to the film F is formed to be a flat chamfer. Therefore, even the film F fed out of cartridge C is curled, the leading edge of the film F can slide on the corner portion 1f chamfered to be flat and the film F can be fed out smoothly.

Next, an embodiment of a one-time use camera for attaining the third object will be explained as follows, referring to Fig. 3 and Fig. 8.

As shown in Fig. 3, film F is held at a prescribed position in the optical axis direction by film guide plane 1g on unit main body 1 and pressure plate surface 4b provided on rear cover 4. Fig. 8 (A) is a diagram showing rear cover 4 viewed from the pressure plate surface 4b side, Fig. 8 (B) is an enlarged view of section A in Fig. 8 (A), Fig. 8 (C) is a sectional view taken on line B - B in Fig. 8 (B), and Fig. 8 (D) is a sectional view taken on line C - C in Fig. 8 (B), As shown in Figs. 8, plural recessed portions 4c are provided on the pressure plate surface 4b and surface 4d other than the recessed portion 4c is formed to be a curved surface.

An area ratio of the recessed portion 4c to the pressure plate surface 4b is between 40% and 50%. The reason why this area ratio is preferable is that when the area ratio is not more than 40%, a contact area between film F and a pressure plate surface is increased and a way out for dust causing scratches is reduced accordingly, making the film F to be subject to scratches, while when the area ratio exceeds 50%, an area of projections on the pressure plate surface is reduced, causing the contact pressure per unit area between the projections and the film F to be excessive and thereby making the film F to be scratched on the contrary.

Therefore, film F comes in contact with curved surface 4d to be hardly scratched, and no pressure fog is caused on the film because of low pressure for contact with the film.

The recessed portion 4c represents a plurality of straight grooves crossing each other, and they may also be curved grooves.

A portion representing at least an area which comes in contact with a photographing image plane of film F is enough to be provided with recessed portions 4c and curved surfaces 4d, but it may also be broader than that.

Next, a production method which is slightly different from that mentioned above will be explained as follows.

First, in the aforesaid production method, film F is attracted to spool 3 by means of air suction conducted by vacuum pump 24 through air suction hole 3c provided on the spool 3. However, it is also possible to provide adhesion layer 31 serving as an adhesion section on a part of flank 3b of the spool 3 to make the leading edge of film F to be stuck to the adhesion layer 31 as shown in Fig. 9, which is different from the aforesaid production method. In this case, air suction by means of vacuum pump 24 is not necessary, and film-winding by means of film-winding motor 27 has only to be possible.

It is also possible to provide adhesion layer 32 serving as an adhesion section on the entire cylindrical surface of flank 3b of the spool 3 as shown in Fig. 10. In this case, attraction by means of vacuum pump 24 is naturally unnecessary, and the position of adhesion does not need to be regulated. Further, the spool 3 can be left to rotate without being kept to be at a standstill.

Incidentally, in this case, it is preferable to rotate spool 3 at a speed which is equal to or slower than the speed for feeding out film F.

In either case of Fig. 9 and Fig. 10, load for film feeding-out motor 21 of cartridge C is reduced after the film F has been wound around the spool 3, which can be detected and the film feeding-out motor 21 can therefore be suspended.

It is further preferable to use a two-sided adhesive tape to form adhesion layers 31 and 32.

In addition, with regard to loading of cartridge C, other methods can be considered. Namely, in the method stated above, cartridge C is loaded in cartridge chamber 1a of unit main body 1 before feeding out film F. However, it is also possible to load cartridge C and spool 3 in unit main body 1 after feeding out film F, by conducting only feeding out of film F outside the unit main body 1.

Fig. 11 shows another method for loading cartridge C. In Fig. 11, film F is fed out of the cartridge C outside unit main body 1, first. For this feeding out of the film F, the film feeding-out motor 21 stated above is used. The length of the film F to be fed out is equivalent to a length which makes the leading edge of the film F fed out of the cartridge C to reach air suction hole 3c on the spool 3 when assuming that the cartridge C and the spool 3 are loaded in the unit main body 1. After that, the spool 3 is loaded in film roll chamber 1b of the unit main body 1, then, after releasing engagement between the cartridge C and the film feeding-out motor 21, the cartridge C from which the film F has been fed out by the aforesaid length is loaded in cartridge chamber 1a. After this, attraction of the film F to the spool 3 conducted by vacuum pump 24, winding the film F around the spool 3, and suspension are carried out.

Incidentally, the adhesion layers 31 and 32 stated above may also be used in place of the air suction hole 3c.

Rear cover 4 may be mounted either immediately after loading the spool 3 and the cartridge C in the unit main body 1, or after completion of winding the film F on the spool 3.

In the aforesaid embodiment, the film F is wound around individual spool 3. However, it is also possible to load a film roll without a core for shipment by winding film F on a film-winding shaft fixed on the tip of vacuum head 25 and by drawing out the film-winding shaft after winding the film F for a prescribed length. Therefore, a film-wing member mentioned in the present invention includes spool 3 and the above-mentioned film-winding shaft.

Though the embodiment stated above has been explained by using an APS film having at its tip portion no perforation, the embodiment can also be applied to a 135 film having thereon perforations up to its tip portion.

In the method for producing a one-time use camera of the invention, even if a film is wound under the condition that a rear cover is mounted after a cartridge an a film-winding member are loaded in a unit main body, the film can be wound surely to the prescribed position.

## Claims

1. A method for producing a one-time use camera, comprising the steps of:
loading a cartridge, in which one end of an unexposed film is engaged with a winding shaft and said unexposed film is wound around said winding shaft, and a film-winding member to a unit main body of said one-time use camera having a photographing function so that said cartridge is placed at one side of an image frame of said unit main body for forming a photographing image plane and said film-winding member is placed at other side of said image frame;
feeding out said film from said cartridge by applying a rotation of a feeding-out motor to said winding shaft;
wind said film onto said film-winding member from said cartridge acrossing said image frame by applying a rotation of a film-winding motor to said film-winding member at a torque smaller than an engagement strength between said film and said winding shaft;
detecting a rise of film-winding torque of said film by said film-winding motor at completion of said film-winding step;
stopping said rotation of said film-winding motor when said film-winding torque by said film-winding motor exceeds a predetermined value; and
rotating said feeding-out motor reversely for drawing said film wound on said film-winding member to a predetermined position.

2. The method of claim 1, further comprising the step of:
covering at least said cartridge, said film, and said film-winding member with a rear cover of said unit main body.

3. The method of claim 1, wherein said step of rotating said feeding-out motor reversely is executed by counting a revolution of said feeding-out motor.

4. The method of claim 1, wherein said film-winding member is a spool as a single part.

5. The method of claim 1, wherein said cartridge includes a light-shielding cover and said step of loading said cartridge includes a step of:
opening said light-shielding cover before said step of feeding out said film from said cartridge.

6. The method of claim 1, further comprising:
setting a film-winding knob, of said unit main body to perform a winding operation of said film, free of rotation before said step of feeding out said film from said cartridge.

7. The method of claim 1, further comprising:
setting a sprocket, of said unit main body to be engaged with a perforation of said film, free of rotation before said step of feeding out said film from said cartridge.

8. The method of claim 1, wherein said feeding-out motor and said film-winding motor are servomotors.

9. The method of claim 1, wherein a cartridge chamber, to which said cartridge is loaded by said step of loading said cartridge, has a chamfered flat surface between a plane, which is parallel with said film fed out from said cartridge in said cartridge chamber to said image frame, and an internal wall of said cartridge chamber which is perpendicular to said plane.

10. The method of claim 2, wherein said unit main body includes a film guide plane and said rear cover includes a pressure plate surface so that said film guide plane and said pressure plate hold said film at a predetermined position in the optical axis of a lens of said unit main body;
wherein a plurality of recess portions are provided on at least a portion of said pressure plate surface where a rear side of a photographing image plane of said film comes in contact, an area rate of said plurality of recess portions on said pressure plate surface is in a range between 40 % and 50 %, and a plane other than said plurality of recess portions on said pressure plate surface is formed to be a curved surface.

11. The method of claim 10, wherein said plurality of recess portions are plurality of straight grooves crossing each other.
